# EUROPÄISCHE PATENTSCHRIFT

(11) **EP 1 655 202 B1**
(45) Veröffentlichungstag und Bekanntmachung des Hinweises auf die Patenterteilung: **29.04.2009**
(21) Anmeldenummer: 05024145.4
(22) Anmeldetag: 04.11.2005
(51) Int. Cl.: B62D 5/00

(54) **Baugruppe mit einem Lenkrad und einem Lenkwiderstandsgenerator**
Module unit with a steering wheel and a steering resistance generator
Ensemble avec volant et un générateur de résistance de la direction

(30) Priorität: 04.11.2004 DE 202004017030 U
(43) Veröffentlichungstag der Anmeldung: 10.05.2006
(73) Patentinhaber: TRW Automotive GmbH, 73553 Alfdorf (DE)
(72) Erfinder: Engel, Rainer, 47803 Krefeld (DE); Heitzer, Heinz-Dieter, 52525 Heinsberg (DE)
(74) Vertreter: Prinz & Partner

(56) Entgegenhaltungen:
- WO-A-20/04091995
- DE-A1- 3 527 236
- DE-A1- 10 057 950
- DE-A1- 10 221 241
- DE-A1- 10 307 567
- DE-A1- 10 313 085

## Beschreibung

Die Erfindung betrifft eine Baugruppe mit einem Lenkrad und einem Lenkwiderstandsgenerator in einem Steer-By-Wire-Lenksystem.

Ein rein mechanisch betätigtes Fahrzeuglenksystem mit einem Ritzel, das in Eingriff mit einer Zahnstange ist, ist aus der DE 35 27 236 A1 bekannt. Es ist eine Reibvorrichtung vorgesehen, die Schwingungen der Zahnstange abbaut.

Neben rein mechanisch betätigten Fahrzeuglenksystemen werden in zunehmendem Maße sog. Steer-By-Wire-Lenksysteme bekannt, bei denen der vorgegebene Lenkwunsch des Fahrers auf elektronisch-elektrischen Weg zu einer Stelleinrichtung weitergeleitet werden kann, die die Stellung der Räder steuert. Bei solchen Lenksystemen könnte auf eine herkömmliche Antriebsverbindung zwischen den Fahrzeugrädern und dem Lenkrad verzichtet werden.

Um bei zukünftigen Steer-By-Wire-Lenksystemen ein Lenkgefühl zu erhalten, das dem konventioneller mechanischer Lenksysteme entspricht, werden Lenkwiderstandsgeneratoren eingebaut, die Rückstell- und Widerstandsmomente simulieren. Solche Widerstandsgeneratoren wirken jedoch nicht effektiv bei kleinen Drehwinkeländerungen, was zu einem schlechten Lenkgefühl für den Fahrer führt und den Lenkkomfort verschlechtert.

Der Erfindung liegt das Problem zu Grunde, das Lenkgefühl und damit den Lenkkomfort für den Fahrer insbesondere bei kleinen Drehwinkeländerungen zu verbessern.

Diese Probleme werden bei der eingangs genannten Baugruppe durch die Merkmale des Anspruchs 1 gelöst. Die mit der Erfindung erzielten Vorteile bestehen insbesondere darin, daß mit Hilfe dieser mechanischen Reibbaugruppe ein konstantes Reibmoment erzeugt wird, das für den Fahrer spürbar ist und das Lenkgefühl und den Lenkkomfort insbesondere bei kleinen Drehwinkeländerungen verbessert ist, da selbst kleine Einschlagbewegungen ein Reibmoment zur Folge haben. Eine solche Reibbaugruppe kann insbesondere in zukünftige Steer-By-Wire-Lenksysteme eingebaut werden.

Durch die variable Befestigungsmöglichkeit der Klemmutter an der Lenkwelle ist eine Anpassung an verschieden große, gewünschte Reibmomente und somit an unterschiedliche Einsatzbedingungen ohne große bauliche Veränderungen möglich.

Da die Klemmutter vorzugsweise mit Schrauben an der Lenkwelle angebracht ist, kann die Verbindung schnell gelöst werden und problemlos an andere Einsatzbedingungen angepaßt werden.

Vorzugsweise ist die Reibbaugruppe mit einer Lenkwelle verbunden, wobei die Reibbaugruppe bei einer Drehbewegung des Lenkrads und der daraus entstehenden Rotation der Lenkwelle ein Reibmoment erzeugt. Dadurch wird das Lenkgefühl des Fahrers erheblich verbessert, und die Reibbaugruppe kann in die Lenksäulenanordnung integriert werden.

Gemäß einer Ausführungsform ist ein Kugellager vorgesehen, das als Schrägkugellager ausgebildet ist. Da ein Kugellager Reibung ohne große Abnutzung widersteht, ist es vorteilhaft für diese Ausführung. Die Ausbildung als Schrägkugellager ermöglicht eine leichte Montage.

Vorzugsweise ist die Feder eine Tellerfeder. Eine Tellerfeder ermöglicht eine kompakte Bauweise sowie eine hohe Andruckkraft. Des weiteren weist die Tellerfeder einen nicht-linearen Kraftverlauf auf, so daß Verschleiß nicht zu einer abfallenden Anddruckkraft führt.

Weitere Merkmale und Vorteile der Erfindung ergeben sich aus den Unteransprüchen. Die Erfindung wird nachfolgend anhand der bevorzugten Ausführungsform beschrieben, die in den Zeichnungen dargestellt ist. In den Zeichnungen zeigen:
- Figur 1 eine schematische Darstellung der Komponenten eines Steer-By-Wire-Lenksystems;
- Figur 2 eine Diagrammdarstellung des Lenkwiderstands nach dem Einbau der erfindungsgemäßen Baugruppe;
- Figur 3 eine geschnittene Seitenansicht der Baugruppe in einer ersten Ausführungsform; und
- Figur 4 eine geschnittene Seitenansicht der Baugruppe in einer zweiten Ausführungsform.

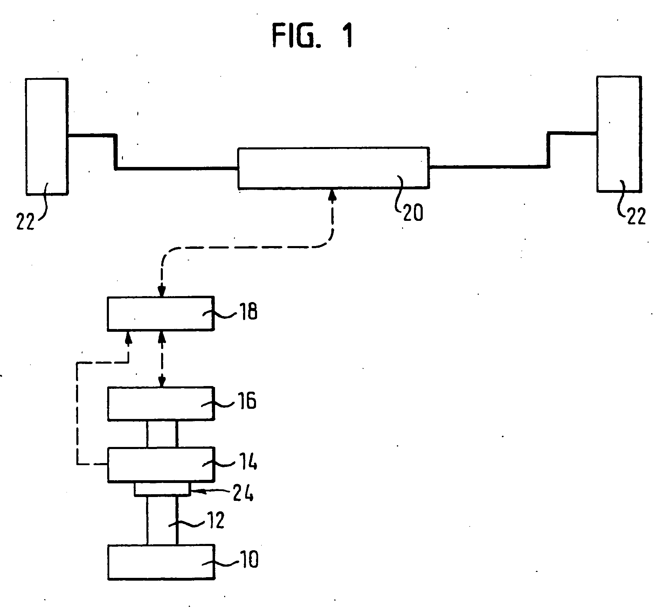

Figur 1 zeigt schematisch ein Steer-By-Wire-Lenksystem für ein Kraftfahrzeug. Zu den Komponenten des Lenksystems gehören ein vom Fahrer zu betätigendes Lenkrad 10, das über eine Lenkwelle 12 mit einem Lenkmomentsensor 14 verbunden ist, der elektrische Signale produziert, die für die Stellung des Lenkrads 10 repräsentativ sind. Es ist ein Lenkwiderstandsgenerator 16 vorgesehen, um eine spürbare Handkraft am Lenkrad 10 zu erzeugen. Er enthält einen Elektromotor und gegebenenfalls ein Untersetzungsgetriebe. Der Lenkmomentsensor 14 und der Lenkwiderstandsgenerator 16 sind mit einem Steuergerät 18 gekoppelt, das mit einer Stelleinrichtung 20 in Verbindung steht, um die Stellung von lenkbaren Rädern 22 zu steuern. An der Lenkwelle 12, vorzugsweise vor dem Lenkmomentsensor 14, ist eine mechanische Reibbaugruppe 24 angeordnet, um ein für den Fahrer spürbares Reibmoment am Lenkrad 10 zu erzeugen und damit das Lenkgefühl zu verbessern. Die Reibbaugruppe 24 wird im folgenden näher erklärt.

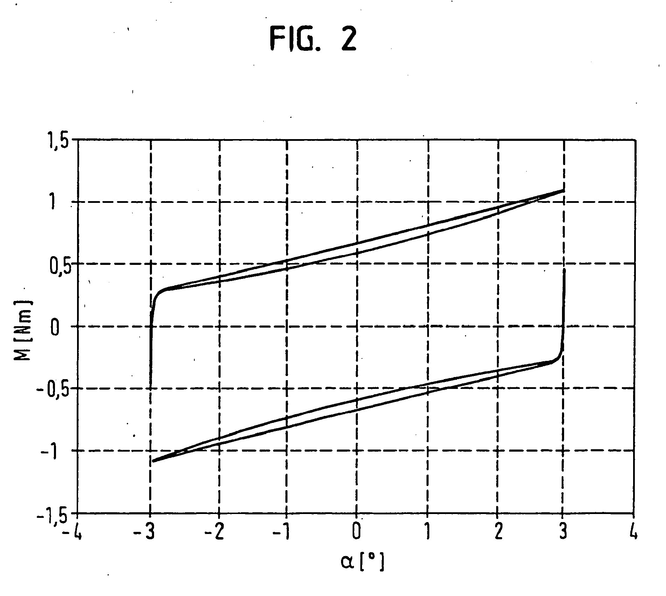

In Figur 2 ist der erwünschte Verlauf des Reibmoments eines Steer-By-Wire-Lenksystems dargestellt, dabei ist der Verstellwinkel α und das Reibmoment M auf den beiden Achsen gezeigt. Der Verlauf weist eine Hysterese auf; bei diesem Verlauf erzeugt jede Änderung des Verstellwinkels unabhängig von einem Links- oder Rechtseinschlag des Lenkrads 10 dasselbe für den Fahrer spürbare Reibmoment. Darüber hinaus ist selbst bei kleinen Drehwinlceländerungen ein Reibmoment vorhanden, das zu einem verbesserten Lenkgefühl führt. Um eine solche Hysterese zu erreichen, wird die mechanische Reibbaugruppe 24 in das Lenksystem eingebaut, die ein Reibmoment zur Simulation der mechanischen Reibung eines mechanischen Lenksystems erzeugt.

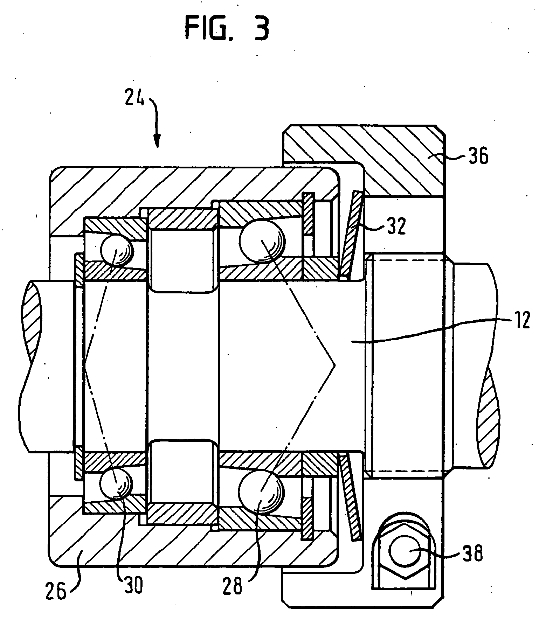

Figur 3 zeigt die Reibbaugruppe 24. Es ist eine Lenkwelle 12 zu sehen, die an das Lenkrad 10 (Fig. 1) gekoppelt ist. Die Lenkwelle 12 ist teilweise von einem Lenkwellengehäuse 26 umgeben. Das Lenkwellengehäuse 26 kann den Bewegungen der Lenkwelle 12 nicht folgen, da es auf bekannte Art und Weise befestigt ist (nicht gezeigt). Zwischen der Lenkwelle 12 und dem Lenkwellengehäuse 26 ist ein Kugellager 28 angeordnet. Bei dem Kugellager 28 handelt es sich um ein einreihiges Schrägkugellager. Da einreihige Schrägkugellager axiale Belastungen nur in einer Richtung aufnehmen können, ist ein zweites Kugellager 30 notwendig, um eine Verschiebung zu verhindern. Die Kugellager 28, 30 sind in einer sog. O-Anordnung angeordnet, d.h. die Berührungslinien laufen zur Lagerachse hin auseinander. Dadurch ergibt sich eine relativ starre Lagerung, die Kippmomente aufnehmen kann. Die Kugellager 28, 30 sind unterschiedlich groß ausgebildet, um einen leichten Einbau zu ermöglichen.

Eine Feder 32 wirkt auf einen Lagerinnenring des Kugellagers 28. Die Feder 32 ist als Tellerfeder ausgebildet, kann jedoch auf andere Art und Weise ausgebildet sein. Die Feder 32 stützt sich an einer Klemmutter 36 ab. Das Bauteil, an dem sich die Feder 32 abstützt, kann beispielsweise auch als Scheibe mit Sicherungsring (nicht gezeigt) ausgeführt sein.

Bei der in Figur 3 gezeigten Klemmutter 36 handelt es sich um ein ringförmiges Bauteil, das um die Lenkwelle 12 angeordnet ist. Die Klemmutter 36 kann aufgrund ihrer Befestigung durch Schrauben 38 variabel an der Lenkwelle 12 angebracht werden und kann dadurch die Feder 32 unterschiedlich stark vorspannen. Dabei kann die Klemmutter 36 den Drehbewegungen der Lenkwelle 12 folgen, ist jedoch in axialer Richtung unverschieblich befestigt.

Bei einer Lenkbewegung durch den Fahrer dreht sich die Lenkwelle 12. Die Klemmutter 36, die Feder 32 und die Lagerinnenringe der Kugellager 28, 30 drehen sich dabei mit. Das Lenkwellengehäuse 26 und die Lageraußenringe der Kugellager 28, 30 dagegen können den Bewegungen nicht folgen. Durch den Druck, den die Feder 32 auf das Kugellager 28 ausübt, entstehen Reibmomente. Diese Reibmomente werden unabhängig von der Größe der Drehwinkeländerung von dem Fahrer gespürt und verbessern dadurch das Lenkgefühl und den Lenkkomfort.

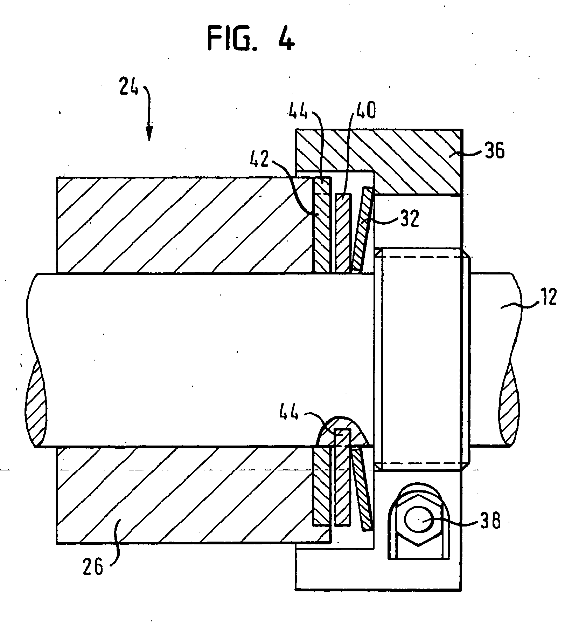

Figur 4 zeigt die Reibbaugruppe 24 in einer zweiten Ausführungsform. Gleiche Bauteile sind mit denselben Bezugszeichen versehen.

Das Lenkwellengehäuse 26 umgibt die Lenkwelle 12 teilweise und ist nichtdrehbar ausgeführt. Die Klemmutter 36 ist mit den Schrauben 38 an der Lenkwelle 12 befestigt und kann sich mit der Lenkwelle 12 drehen. Die Feder 32 stützt sich an der Klemmutter 36 ab, und drückt hierbei eine erste Reibscheibe 40 gegen eine zweite Reibscheibe 42.

Die erste Reibscheibe 40 ist drehfest mit der Lenkwelle 12 verbunden und die zweite Reibscheibe 42 drehfest mit dem Lenkwellengehäuse 26. Die Befestigung der Reibscheiben 40, 42 erfolgt über Fortsätze 44, die an den Reibscheiben 40, 42 angeordnet sind und in entsprechende Vertiefungen der Lenkwelle 12 bzw. des Lenkwellengehäuses 26 eingreifen.

Bei einer Drehung des Lenkrads 10 und einer daraus resultierenden Rotation der Lenkwelle 12 erfolgt ein Mitrotieren der Klemmutter 36, der Feder 32 und der ersten Reibscheibe 40 gegen die drehfest an dem Lenkwellengehäuse 26 befestigte zweite Reibscheibe 42. Dadurch entstehen Reibmomente, die für den Fahrer spürbar sind und die das Lenkgefühl und den Lenkkomfort erheblich verbessern.

Durch die variable Befestigungsmöglichkeit der Klemmutter 36 an der Lenkwelle 12 können verschieden große Reibmomente simuliert werden, die den erwünschten Anforderungen entsprechen. Dadurch kann die Reibbaugruppe 24 an unterschiedliche Einsatzbedingungen angepaßt werden.

Bei der Verwendung beispielsweise einer Scheibe mit Sicherungsring, an der sich die Feder abstützt, entstehen ebenfalls die gewünschten Reibmomente.

## Patentansprüche

1. Baugruppe mit einem Lenkrad (10) und einem Lenkwiderstandsgenerator (16) in einem Steer-by-wire-Lenksystem, wobei eine Reibbaugruppe (24) vorgesehen ist, die ein Reibmoment zur Simulation der mechanischen Reibung eines mechanischen Lenksystems erzeugt, wobei eine Feder (32) vorgesehen ist, die zwischen der Reibbaugruppe (24) und einer Klemmutter (36) angeordnet ist, wobei die Klemmutter (36) in verschiedenen Positionen an einer Lenkwelle (12) befestigt werden kann und wobei die Klemmutter (36) an der Lenkwelle (12) mit Schrauben (38) angebracht ist.

2. Baugruppe nach Anspruch 1, **dadurch gekennzeichnet, daß** die Reibbaugruppe (24) mit der Lenkwelle (12) verbunden ist, wobei die Reibbaugruppe (24) bei einer Drehbewegung des Lenkrads (10) und der daraus entstehenden Rotation der Lenkwelle (12) ein Reibmoment erzeugt.

3. Baugruppe nach Anspruch 1 oder 2, **dadurch gekennzeichnet, daß** ein Kugellager (28) vorgesehen ist, das als Schrägkugellager ausgebildet ist.

4. Baugruppe nach Anspruch 3, **dadurch gekennzeichnet, daß** das Kugellager (28) durch die Feder (32) vorgespannt ist.

5. Baugruppe nach Anspruch 1 oder 2, **dadurch gekennzeichnet, daß** eine erste Reibscheibe (40) angeordnet ist, die durch die Feder (32) vorgespannt ist.

6. Baugruppe nach Anspruch 5, **dadurch gekennzeichnet, daß** die erste Reibscheibe (40) von der Feder (32) gegen eine zweite Reibscheibe (42) gedrückt wird.

7. Baugruppe nach Anspruch 6, **dadurch gekennzeichnet, daß** die erste Reibscheibe (40) drehfest mit der Lenkwelle (12) verbunden ist und die zweite Reibscheibe (42) drehfest mit dem Lenkwellengehäuse (26).

8. Baugruppe nach Anspruch 4 oder 5, **dadurch gekennzeichnet, daß** die Feder (32) eine Tellerfeder ist.

## Claims

1. An assembly including a steering wheel (10) and a steering resistance generator (16) in a steer-by-wire steering system, a friction assembly (24) being provided which generates a friction moment for simulating the mechanical friction of a mechanical steering system, a spring (32) being provided which is arranged between the friction assembly (24) and a clamping nut (36), the clamping nut (36) being adapted to be attached to a steering shaft (12) in various positions, and the clamping nut (36) being mounted to the steering shaft (12) by means of screws (38).

2. The assembly according to claim 1, **characterized in that** the friction assembly (24) is connected to the steering shaft (12), the friction assembly (24) generating a friction moment upon a rotary movement of the steering wheel (10) and the resulting rotation of the steering shaft (12).

3. The assembly according to claim 1 or 2, **characterized in that** a ball bearing (28) is provided which is configured as an angular ball bearing.

4. The assembly according to claim 3, **characterized in that** the ball bearing (28) is biased by the spring (32).

5. The assembly according to claim 1 or 2, **characterized in that** a first friction disk (40) is disposed which is biased by the spring (32).

6. The assembly according to claim 5, **characterized in that** the first friction disk (40) is urged by the spring (32) against a second friction disk (42).

7. The assembly according to claim 6, **characterized in that** the first friction disk (40) is connected to the steering shaft (12) for joint rotation therewith, and the second friction disk (42) is non-rotatably connected to the steering shaft housing (26).

8. The assembly according to claim 4 or 5, **characterized in that** the spring (32) is a disk spring.

## Revendications

1. Ensemble comportant un volant de direction (10) et un générateur de résistance de direction (16) dans un système de direction par câble, dans lequel est prévu un ensemble de frottement (24) qui engendre un couple de frottement pour simuler un frottement mécanique d'un système de direction mécanique, dans lequel est prévu un ressort (32) qui est agencé entre l'ensemble de frottement (24) et un écrou de serrage (36), l'écrou de serrage (36) pouvant être fixé dans différentes positions sur un arbre de direction (12), et l'écrou de serrage étant monté sur l'arbre de direction (12) au moyen de vis (38).

2. Ensemble selon la revendication 1, **caractérisé en ce que** l'ensemble de frottement (24) est relié à l'arbre de direction (12), l'ensemble de frottement (24) engendrant un couple de frottement lors d'un mouvement de rotation du volant de direction (10) et lors de la rotation de l'arbre de direction (12), qui en résulte.

3. Ensemble selon la revendication 1 ou 2, **caractérisé en ce qu'**il est prévu un roulement à billes (28) qui est réalisé sous forme de roulement à billes à portée oblique.

4. Ensemble selon la revendication 3, **caractérisé en ce que** le roulement à billes (28) est précontraint par le ressort (32).

5. Ensemble selon la revendication 1 ou 2, **caractérisé en ce qu'**est agencée une première plaque de frottement (40) qui est précontrainte par le ressort (32).

6. Ensemble selon la revendication 5, **caractérisé en ce que** la première plaque de frottement (40) est pressée par le ressort (32) contre une deuxième plaque de frottement (42).

7. Ensemble selon la revendication 6, **caractérisé en ce que** la première plaque de frottement (40) est reliée de manière solidaire en rotation avec l'arbre de direction (12) et la deuxième plaque de frottement (42) est reliée de manière solidaire en rotation avec le boîtier d'arbre de direction (26).

8. Ensemble selon la revendication 4 ou 5, **caractérisé en ce que** le ressort (42) est une rondelle Belleville.
